# EUROPÄISCHE PATENTSCHRIFT

(11) **EP 2 385 002 B1**
(45) Veröffentlichungstag und Bekanntmachung des Hinweises auf die Patenterteilung: **22.05.2013**
(21) Anmeldenummer: 11159988.2
(22) Anmeldetag: 28.03.2011
(51) Int. Cl.: B65G 17/20, B65G 19/02, B65G 47/61

(54) **Mitnehmer für Hängeförderanlage sowie die Hängeförderanlage**
Actuator for overhead transport system as well as the overhead transport sytem
Dispositif d'actionnement dans un système à convoyeur suspendu ainsi que le système à convoyeur suspendu

(30) Priorität: 04.05.2010 DE 102010016777
(43) Veröffentlichungstag der Anmeldung: 09.11.2011
(73) Patentinhaber: psb intralogistics GmbH, 66955 Pirmasens (DE)
(72) Erfinder: Dietz, Lothar, 66955 Pirmasens (DE); Neuber, Wolfgang, 66955 Pirmasens (DE)
(74) Vertreter: Viering, Jentschura & Partner

(56) Entgegenhaltungen:
- DE-A1-102006 040 900
- DE-U1- 20 317 972
- US-B1- 6 199 682
- US-B1- 6 415 907

## Beschreibung

Die Erfindung betrifft einen Mitnehmer für eine Hängeförderanlage zum Mitnehmen von an einer Führungsbahn der Hängeförderanlage hängenden Waren, mit einem Mitnehmerkörper, der einen Vorlaufabschnitt und einen Nachlaufabschnitt hat, wobei der Vorlaufabschnitt in Form einer Rampe mit einem Rampenprofil ausgebildet ist, um ein sanftes Überlaufen von auf der Führungsbahn aufgestauten Waren zu ermöglichen, und wobei der Nachlaufabschnitt in Form eines Hakens mit einem Hakenstück ausgebildet ist, um damit eine an der Führungsbahn hängende Ware einzuhaken und sie entlang der Führungsbahn mitzunehmen. Die Erfindung betrifft ferner eine Hängeförderanlage mit derartigen Mitnehmern.

Aus der EP 2 128 051 A1 sind wie oben erläuterte Mitnehmer und Hängeförderanlagen bekannt.

Es ist eine Aufgabe der Erfindung, einen Mitnehmer sowie eine Hängeförderanlage mit Mitnehmern zu schaffen, mit denen das Einschleusen und/oder Ausschleusen von Waren auf und/oder von einer Förderbahn verbessert durchführbar ist.

Hierzu stellt die Erfindung einen Mitnehmer für eine Hängeförderanlage zum Mitnehmen von an einer Führungsbahn der Hängeförderanlage hängenden Waren bereit, mit einem Mitnehmerkörper, der einen (in Mitnahme- oder Transportrichtung entlang der Führungs- oder Transportbahn vorlaufenden) Vorlaufabschnitt und einen (bezüglich der Mitnahme- oder Transportrichtung entlang der Führungs- oder Transportbahn nachlaufenden) Nachlaufabschnitt hat, wobei der Vorlaufabschnitt an seiner unteren Stirnseite in Form einer in Richtung vom Vorlaufabschnitt zum Nachlaufabschnitt nach unten hin ansteigenden (längs der Mitnahme- oder Transportrichtung verlaufenden) Rampe mit einem Rampenprofil ausgebildet ist, um ein sanftes Überlaufen von auf der Führungsbahn aufgestauten Waren zu ermöglichen, und wobei der Nachlaufabschnitt in Form eines Hakens mit einem Hakenstück ausgebildet ist, um damit eine an der Führungsbahn hängende Ware einzuhaken und sie entlang der Führungsbahn mitzunehmen, wobei der Vorlaufabschnitt entlang seiner Rampe, z.B. entlang deren Rampenprofils (entlang der Rampenprofilkurve), mit einer sich zu einer Seite hin oder zu beiden Seiten hin (quer zur Führungsbahn) erstreckenden Verbreiterung der Rampe ausgebildet ist (d.h., die Rampe bzw. die rampenförmig ausgebildete untere Stirnseite des Vorlaufabschnitts (und damit die von der unteren Stirnseite des Mitnehmerkörpers gebildete Rampenfläche der Rampe) ist zu einer oder zu beiden Seiten hin (quer zur Transportrichtung bzw. quer zur Richtung vom Vor- zum Nachlaufabschnitt) verbreitert, bevorzugt flügelartig verbreitert, und/oder wobei der Haken bzw. das Hakenstück mit einer sich zu einer Seite hin oder zu beiden Seiten hin (quer zur Führungsbahn) erstreckenden Verbreiterung ausgebildet ist. Die Verbreiterung des Vorlaufabschnitts ist nach einer Ausführungsform flügelartig, sodass damit die Rampe im Querschnitt die Form eines auf dem Kopf stehenden T hat. D.h., der Mitnehmerkörper ist in einem oberen Abschnitt bezüglich seines unteren stirnseitigen Abschnitts schlanker gestaltet, z.B. in Form eines im Wesentlichen kastenförmigen Körperabschnitts mit einer entlang der vom Vor- zum Nachlaufabschnitt definierten Richtung verlaufenden Längsachse, einer in Vertikalrichtung verlaufenden Breitenachse, und einer in horizontaler Querrichtung verlaufenden Dickenachse, wobei dieser kastenförmige Körperabschnitt des Mitnehmerkörpers (oberhalb der Verbreiterung) z.B. einer größere Breite als Dicke hat. Der Mitnehmerkörper ist bevorzugt als ein einziger Körper ausgebildet, d.h. er weist für sich gesehen keine relativ zueinander beweglichen Teile auf, wobei der Mitnehmerkörper z.B. integral aus einem Stück gefertigt sein kann.

Die Erfindung stellt ferner Hängeförderanlage bereit, mit einem Umlaufantriebsstrang, der in eine Förderrichtung bewegbar angetrieben ist, und mit entlang dem Umlaufantriebsstrang an diesem (beim Betrieb stets) angebrachten, wie in dieser Anmeldung beschriebenen, erfindungsgemäßen Mitnehmern, von welchen beim Bewegen des Umlaufantriebsstrangs auf einer zu dem Umlaufantriebsstrang benachbart verlaufenden Führungsbahn hängende Waren in die Förderrichtung mitgenommen werden können, wobei die Mitnehmer quer zu dem Umlaufantriebsstrang auslenkbar, z.B. linear geführt auslenkbar, an dem Umlaufantriebsstrang angebracht sind.

Aufgrund der Verbreiterung der Rampe können die Mitnehmer beim Einschleusen von Waren auf die Führungsbahn bereits frühzeitig mit an den Waren vorgesehenen Mitnahmestücken in Kontakt kommen, wenn die Waren noch in einem gewissen (durch die seitliche Erstreckung der Verbreiterung definierten) Abstand zur Führungsbahn sind. Damit können die Mitnehmer schon frühzeitig quer zur Führungsbahn ausgelenkt werden und damit ein reibungsloseres Einschleusen der Waren auf die Führungsbahn ermöglichen.

Bei der Ausführungsform, bei der das Hakenstück an seinem freien Hakenstückende mit einer sich zu beiden Seiten hin erstreckenden Verbreiterung vorgesehen ist, ist die Verbreiterung z.B. ebenfalls flügelartig, sodass der Haken bzw. das Hakenstück die Form eines umgedrehten T hat. Die Verbreiterung ermöglicht es beim Ausschleusen von Waren von der Führungsbahn auf z.B. eine Ausschleusbahn, dass der Mitnehmer mit seinem Haken noch etwas länger in Eingriff mit dem Mitnahmestück der Ware verbleibt und somit die Ware sicherer von der Führungsbahn auf eine Ausschleusbahn bewegt werden kann.

Nach einer Ausführungsform ist die Verbreiterung der Rampe an ihren zueinander entgegengesetzten freien Endabschnitten jeweils mit einer vom Mitnehmer weg und nach unten weisenden vertikalen Abschrägung versehen und/oder ist zum Beispiel auch die Verbreiterung des Hakenstücks an ihren zueinander entgegengesetzten, seitlichen, freien Endabschnitten jeweils mit einer vom Mitnehmer weg und nach unten weisenden vertikalen Abschrägung versehen. D.h. die jeweilige Abschrägung verläuft ausgehend vom Bereich der seitlichen freien Endabschnitte aus schräg nach innen und unten, z.B. in einem Winkel von kleiner oder gleich 45°.

Durch die seitliche Abschrägung der Verbreiterung der Rampe des Vorlaufabschnitts kann ein seitlich auf den Vorlaufabschnitt treffendes Mitnahmestück einer Ware, die von einer Einschleusbahn auf die (Waren-)Förderbahn der Hängeförderanlage einzuschleusen ist, den Mitnehmer leichter unterlaufen und damit reibungsloser relativ zu seinem Umlaufförderstrang auslenken/ausheben, wodurch der Einschleusvorgang weiter verbessert ist. Ähnliches wird mit der vertikalen Abschrägung am Hakenstück erreicht, welches dadurch beim Ausschleusen von Waren aus der Förderbahn reibungsloser und damit leichter von dem Mitnahmestück der momentan vom Mitnehmer mitgenommenen Ware außer Eingriff kommt.

Das Mitnahmestück erstreckt sich z.B. in Querrichtung der Förderbahn langgestreckt (d.h. in jene Richtung, in welche auch der Vorlaufabschnitt und ggf. der hakenförmige Nachlaufabschnitt des Mitnehmers verbreitert sind) und ist z.B. an seinen beiden Längsenden mit jeweils einer von der Ware weg und nach oben weisenden und damit dem Umlaufantriebsstrang zugewandten vertikalen Abschrägung ausgebildet. Mit diesem verlängert ausgebildeten Mitnahmestück kann der Mitnehmer beim Ausschleusen von Waren noch etwas länger im Eingriff mit dem Mitnahmestück gehalten werden. Die vertikalen Abschrägungen/Fasen am Hakenstück des Mitnehmers und am Mitnahmestück, die einander zugewandt sind und die z.B. zu einander komplementär sind (mit gleichen Abschrägungswinkeln), ermöglichen letztlich ein sehr sanftes Außer-Eingriff-Kommen zwischen Mitnehmer und Mitnahmestück, so dass Waren noch reibungsloser ausschleusbar sind.

Die Waren sind nach einer Ausführungsform an auf der Förderbahn geführt bewegbaren Läufern, z.B. Rollläufern, angehängt. Die Läufer weisen an ihrem dem Umlaufantriebsstrang zugewandten Endabschnitt das wie hier in dieser Anmeldung erläuterte Mitnahmestück auf.

Zwischen dem Nachlaufabschnitt und dem Vorlaufabschnitt des Mitnehmers ist z.B. im Mitnehmer ein Aussparungsabschnitt ausgebildet, in welchem das von dem jeweiligen Mitnehmer, d.h. durch dessen Haken bzw. hakenförmigen Nachlaufabschnitt, momentan mitgenommene Mitnahmestück der Ware (oder des Läufers mit der Ware) aufgenommen ist.

Der Aussparungsabschnitt wird z.B. von einem Ende (in Förderrichtung/Transportrichtung gesehen) des Nachlaufabschnitts und von einem Ende des Vorlaufabschnitts begrenzt.

Nach einer Ausführungsform ist die Verbreiterung der Rampe an ihrem dem Nachlaufabschnitt zugewandten Ende, also an z.B. ihrem dem Aussparungsabschnitt zugewandten Ende, beidseitig (bezüglich der Umlaufantriebsstrang-Bahnlinie oder der Förderrichtung/Transportrichtung/Bewegungsrichtung des Mitnehmers) mit einer dem Nachlaufabschnitt (oder dem Aussparungsabschnitt) zugewandten horizontalen Abschrägung versehen. Auch die Verbreiterung des Hakenstücks kann entsprechend an ihrem dem Vorlaufabschnitt (oder dem Aussparungsabschnitt) zugewandten Ende beidseitig (bezüglich der Umlaufstranglängsachse oder der Förderrichtung/Transportrichtung/Bewegungsrichtung des Mitnehmers) mit einer dem Vorlaufabschnitt (oder dem Aussparungsabschnitt) zugewandten horizontalen Abschrägung versehen ist. Diese horizontalen Abschrägungen verbessern weiter das reibungslose seitlich schräge Eingreifen/Außen-Eingriff-Kommen des Mitnahmestücks der Ware/des Läufers in den/von dem Mitnehmer.

Die horizontale Abschrägung der Verbreiterung des Vorlaufabschnitts/der Rampe ist z.B. im Bereich von 20-40° oder im Bereich von 30° +/- 5° bezüglich der Richtung quer zur Förderrichtung (d.h. bezüglich der Richtung quer zu einer den Vorlauf- und den Nachlaufabschnitt verbindenden Linie). Gleiches gilt z.B. für die horizontale Abschrägung der Verbreiterung des Hakenstücks.

Der Mitnehmer ist z.B. einstückig ausgebildet, z.B. in Form eines einstückigen Kunststoffteils, das z.B. durch Spritzgießen hergestellt ist.

An einem oberen Abschnitt des Mitnehmers, d.h. einem Abschnitt oberhalb der Rampe und des Hakens, ist an dem Mitnehmer z.B. eine zu einer Seite hin vorspringende Nase angeformt (z.B. einstückig), an welcher eine Kulisse angreifen kann, um den Mitnehmer in Richtung seiner Auslenkbarkeit quer zu seinem Umlaufantriebsstrang auszulenken bzw. davon wegzuheben.

Die Hängeförderanlage hat z.B. eine oder mehrere Einschleusstellen zum Einschleusen von Waren auf die Führungsbahn entlang einer Einschleusbahn, wobei die jeweilige Einschleusbahn und die Führungsbahn im Bereich der jeweilgen Einschleusstelle einen Horizontalwinkel (in der Draufsicht auf die Führungsbahn gesehener Winkel) von nicht größer als 35° oder nicht größer als 30° oder nicht größer als 25° oder nicht größer als 20° miteinander einschließen, und/oder hat eine oder mehrere Ausschleusstellen zum Ausschleuesen von Waren von der Führungsbahn entlang einer Ausschleusbahn, wobei die jeweilige Ausschleusbahn und die Führungsbahn im Bereich der jeweiligen Ausschleusstelle einen Horizontalwinkel (in der Draufsicht auf die Führungsbahn gesehener Winkel) von nicht größer als 35° oder nicht größer als 30° oder nicht größer als 25° oder nicht größer als 20° miteinander einschließen.

Die horizontale Abschrägung der Verbreiterung des Vorlaufabschnitts/der Rampe und/oder die horizontale Abschrägung der Verbreiterung des Hakens/des Hakenstücks sind nach einer Ausführungsform winkelgleich oder im Wesentlichen winkelgleich mit dem Horizontalwinkel zwischen Einschleusbahn und Führungsbahn an der Einschleusstelle und/oder mit dem Horizontalwinkel zwischen Ausschleusbahn und Führungsbahn an der Ausschleusstelle.

Aufgrund der Verbreiterung des Vorlaufabschnitts und ggf. des Nachlaufabschnitts können die oben genannten spitzen Winkel zum Einschleusen und ggf. Ausschleusen ohne Gefahr eines Blockierens beim Ein- und/oder Ausschleusvorgang vorgesehen werden. Damit erlauben die erfindungsgemäßen Mitnehmer auch eine insgesamt schmalere Bauweise der Hängeförderanlage.

Nach einer Ausführungsform setzt die Hängeförderanlage Rollläufer ein, an denen die Waren hängen und entlang der Führungsbahn geführt rollen, wobei die Hängeförderanlage eine oder mehrere Einschleusstellen zum Einschleusen von Waren auf die Führungsbahn entlang einer Einschleusbahn hat, wobei die jeweilige Einschleusbahn und die Führungsbahn im Bereich der jeweiligen Einschleusstelle einen Vertikalwinkel (in der Seitenansicht der Führungsbahn gesehener Winkel) von nicht größer als 20° oder nicht größer als 15° miteinander einschließen, und/oder wobei die Hängeförderanlage eine oder mehrere Ausschleusstellen zum Ausschleusen von Waren von der Führungsbahn entlang einer Ausschleusbahn, wobei die jeweilige Ausschleusbahn und die Führungsbahn im Bereich der jeweiligen Ausschleusstelle einen Vertikalwinkel (in Seitenansicht der Führungsbahn gesehener Winkel) von nicht größer als 20° oder nicht größer als 15° oder nicht größer als 10° oder nicht größer als 5° miteinander einschließen. Die Rollläufer erlauben hierbei diese derart flachen Winkel beim Ein- und Ausschleusen, sodass die Hängeförderanlage damit insgesamt mit geringerer Bauhöhe auskommt.

Die Erfindung wird nun mit Bezugnahme auf die Zeichnung anhand von Ausführungsbeispielen erläutert. In der Zeichnung werden für gleiche Bauteile gleiche Bezugszeichen verwendet. In der Zeichnung zeigen:
Figur 1 eine abgeschnittene Seitenansicht einer Hängeförderanlage gemäß einer Ausführungsform der Erfindung im Bereich einer Wareneinschleusstelle und im Bereiche einer Warenausschleusstelle,
Figur 2 eine abgeschnittene Draufsicht der in Figur 1 gezeigten Hängeförderanlage,
Figuren 3a, 3b und 3c eine Seitenansicht, eine Draufsicht bzw. eine Rückansicht eines Mitnehmers gemäß einer Ausführungsform der Erfindung,
Figur 4 eine perspektivische Ansicht des Mitnehmers von Figuren 3a-3c und
Figur 5 eine perspektivische Ansicht eines Rollläufers gemäß einer Ausführungsform der Erfindung.

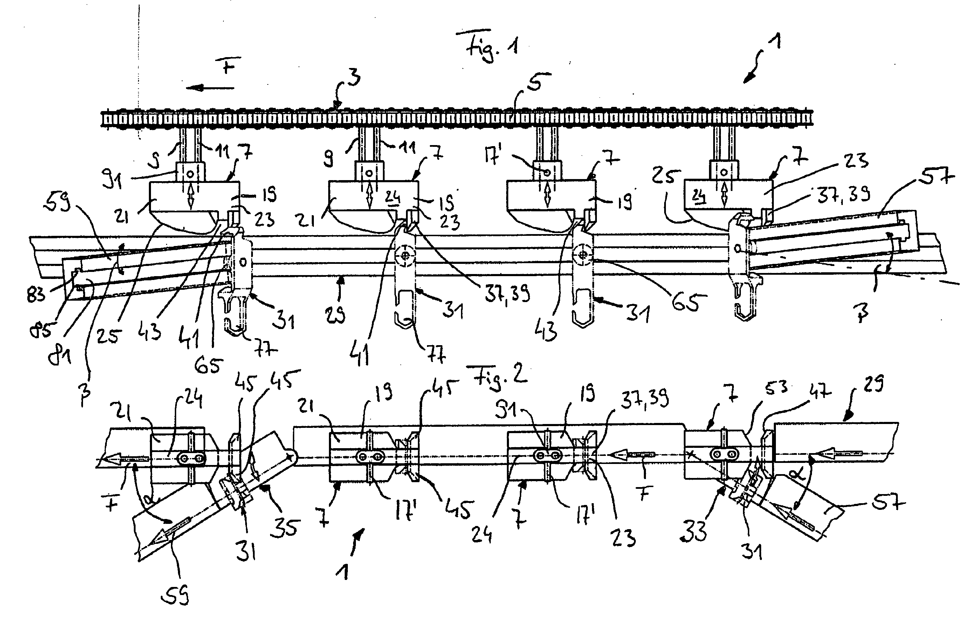

Die in den Figuren 1 und 2 abgeschnitten dargestellte Hängeförderanlage 1 gemäß einer Ausführungsform der Erfindung weist einen Umlaufantriebsstrang 3 in Form einer Antriebskette 5 mit über Kettenbolzen miteinander verbundenen Kettengliedern auf. Die Antriebskette 5 ist entlang einer Förderrichtung oder Transportrichtung F angetrieben, und zwar z.B. über einen Elektromotor, der über ein Antriebszahnrad in die Kette antreibend eingreift.

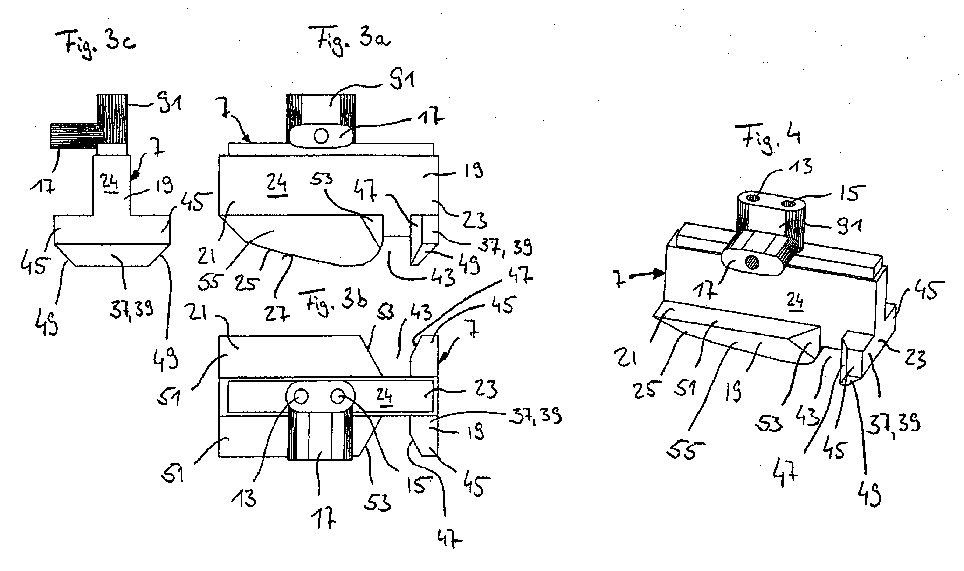

Die Hängeförderanlage hat ferner eine Mehrzahl von Mitnehmern 7, die an der Antriebskette 5 in z.B. regelmäßigen Abständen entlang der Antriebskette 5 angebracht sind, und zwar derart, dass sie einerseits vom Umlaufantriebsstrang 3 bzw. von der Antriebskette 5 stets in der Förderrichtung 5 fest mitgenommen werden und dass sie andererseits quer zum Umlaufantriebsstrang 3 bzw. zur Antriebskette 5 relativ dazu auslenkbar sind, z.B. entgegen einer Federvorspannung oder nur entgegen der Gewichtskraft. Die Anbringung der Mitnehmer erfolgt in diesem Falle, wie z.B. auch in der EP 2 128 051 A1 beschrieben, über zwei jeweilige verlängerte Kettenbolzen 9, 11, die in jeweils zugeordnete Halte-Löcher 13, 15 (siehe Figuren 3b und 4) im jeweiligen Mitnehmer 7 eingreifen, sodass der jeweilige Mitnehmer 7 linear geführt quer zum Umlaufantriebsstrang 3 auslenkbar, hier anhebbar, ist. Die Mitnehmer 7 können jedoch auch auf andere Art an dem Umlaufantriebsstrang 3 auslenkbar angebracht sein, z.B. schwenkend auslenkbar an dem Umlaufantriebsstrang 3 angebracht sein.

Eine Auslenkung kann z.B. über eine wie in der EP 2 128 051 A1 beschriebene Kulissenvorrichtung erfolgen. Hierzu kann der jeweilige Mitnehmer 7 eine seitlich vorstehende (zu eine Seite hin oder auch zu beiden Seiten hin vorstehende) Nase 17 aufweisen (siehe Figuren 3b, 3c und 4), die einstückig am Mitnehmer 7 angeformt ist und gegen welche eine (nicht dargestellte) Kulissenleiste seitlich des Mitnehmers 7 vertikal von unten her drücken kann, um den Mitnehmer 7 anzuheben. Anstelle dieser Nase 17 kann auch ein Stift 17' seitlich zu einer oder zu beiden Seiten des Mitnehmers vorstehend an diesem einstückig angeformt oder als separates Teil in den Mitnehmer eingesteckt sein (siehe Figuren 1 und 2), an welchem Stift 17' die Kulisse angreifen kann.

Der jeweilige Mitnehmer 7 (siehe auch Figuren 3a-3c und 4) hat einen Mitnehmerkörper 19, der einen in Förderrichtung F vorlaufenden Vorlaufabschnitt 21 und einen in Förderrichtung F nachlaufenden Nachlaufabschnitt 23 aufweist. Der Mitnehmerkörper 19 ist in einem zentralen Abschnitt/Bereich 24 schmal gebaut, z.B. in Plattenform, wobei der Vorlaufabschnitt 21 an seiner Unterseite mit einer Rampe 25 ausgebildet ist, wobei die Rampenfläche 27 der Rampe 25 an der unteren Stirnseite des Vorlaufabschnitts 21 des Mitnehmerkörpers 19 verläuft.

Die Rampe 25 und damit deren Rampenfläche 27 sind einer (weiter unten noch beschrienen) Führungsbahn 29 zugewandt, die sich im Vertikalabstand unter dem Umlaufantriebsstrang 3 parallel zu dem Umlaufantriebstrang 3 erstreckt und an der (nicht weiter dargestellte) Waren, wie z.B. Kleiderbügel (z.B. mit oder ohne daran hängenden Kleidern), Kisten, Boxen, Säcke oder sonstige Transportbehälter, oder auch z.B. Fahrräder, angehängt werden können, um von den Mitnehmern 7 entlang der Führungsbahn 29 in Förderrichtung F mitgenommen zu werden.

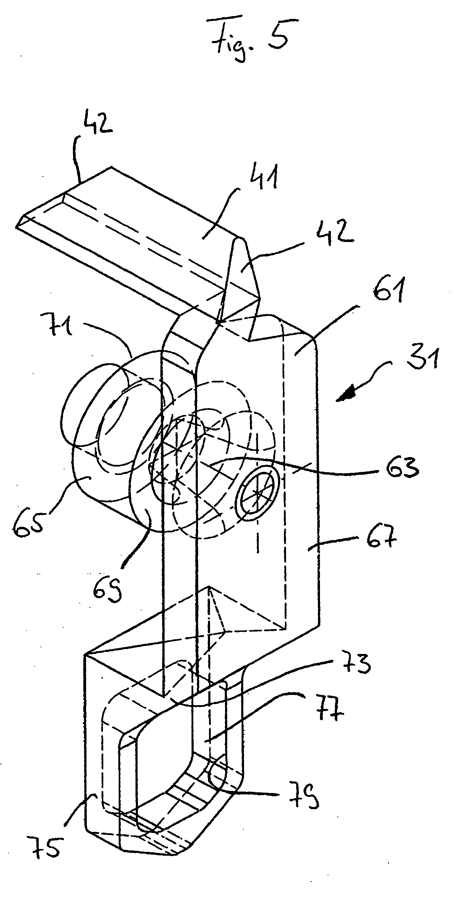

Im vorliegenden Ausführungsbeispiel sind auf der Führungsbahn 29 Läufer 31 in Form von Rollläufern (siehe z.B. auch Figur 5) angeordnet, an denen die Waren angehängt und rollend entlang der Führungsbahn 29 transportierbar bzw. förderbar sind. Die Läufer 31 können auch als Gleitläufer ausgebildet sein. Die Läufer 31 verbleiben in der Regel stets in der Hängeförderanlage 1, d.h. auf deren Führungsbahn 29 und auf z.B. über Weicheneinrichtungen an Einschleusstellen und an Ausschleusstellen (siehe zum Beispiel die Einschleusstelle 33 und die Ausschleusstelle 35 in Figuren 1 und 2) von der oder auf die Führungsbahn 29 abgezweigte andere, entsprechend gestaltete Führungsbahnen.

Die Waren können an nicht dargestellten Warenzufuhrstellen an die Läufer 31 angehängt und an nicht dargestellen Warenabfuhrstellen von den Läufern 31 abgenommen werden.

Die Rampe 25 des jeweiligen Mitnehmers 7 steigt entgegen der Förderrichtung F oder in Richtung vom Vorlaufabschnitt 21 zum Nachlaufabschnitt 23 hin vertikal nach unten an, so dass der Mitnehmer z.B. auf der Förderbahn 29 aufgestaute Waren oder (ggf. jeweils zugehörige) aufgestaute Läufer 31 sanft gleitend überlaufen kann, wobei sich der Mitnehmer 31 dann in einer Vertikalauslenk-Stellung befindet, in welcher er quer zum Umlaufantriebsstrang 3 und quer zur Förderbahn 29 von der Förderbahn weg (vertikal) ausgelenkt ist. Bei z.B. Erreichen eines in Förderrichtung F letzten aufgestauten Läufers 31 kann der Mitnehmer 7 wie weiter unten noch im Detail erläutert z.B. mit der letzten Ware oder dem zugehörigen letzten Läufer 31 in Eingriff kommen, um diese/diesen in Förderrichtung F mitzunehmen.

Der jeweilige Mitnehmer 7 weist an seinem in Förderrichtung F nachlaufenden Nachlaufabschnitt 23 einen Haken 37 mit einem Hakenstück 39 auf, welches ein an der Ware vorgesehenes und in diesem Ausführungsbeispiel an dem Läufer 31 ausgebildetes Mitnahmestück 41 greift/einhakt, um über diesen Eingriff die Ware bzw. hier den Läufer 31 mit ggf. daran angehängter Ware mitnehmen zu können.

In Förderrichtung F gesehen zwischen dem Vorlaufabschnitt 21 und dem Nachlaufabschnitt 23 des Mitnehmers 7 ist im Mitnehmer 7 bzw. in seinem Mitnehmerkörper 21 ein Aussparungsabschnitt 43 ausgebildet, in welchem das Mitnahmestück 41 des Läufers 31, welcher mit dem Mitnehmer 7 momentan im Eingriff ist, um vom Mitnehmer 7 mitgenommen zu werden, aufgenommen ist. Der Aussparungsabschnitt 43 wird nach vorne hin von der Rampe 25 und nach hinten hin vom Haken 37 oder vom Hakenstück 39 begrenzt. Beim Überlaufen von aufgestauten Waren bzw. aufgestauten Läufern 31 wird der Mitnehmer beim Erreichen der in Förderrichtung F gesehen letzten Ware bzw. des letzten Läufers 31 via Gewichtskraft (i. V. m. zum Beispiel Federvorspannkraft) von seiner Vertikalauslenk-Position aus vertikal nach unten bewegt, wobei das Mitnahmestück 41 in den Aussparungsabschnitt 43 eingreift und von dem Haken 37 erfasst und zusammen mit dem Läufer 31 und ggf. der Ware in Förderrichtung mitgenommen wird.

Der Haken 37 oder das Hakenstück 39 des jeweiligen Mitnehmers 7 ist an seinem der Förderbahn 29 und damit dem Läufer 31 oder dessen Mitnahmestück 41 zugewandte Ende (freies Hakenende)/Endabschnitt mit einer sich zu beiden Seiten (bezüglich der durch den Umlaufantriebsstrang 3 definierten zentralen Bahn) hin erstreckenden Verbreiterung 45 ausgebildet, die hier flügelförmig ausgebildet ist, sodass der Haken 37 oder das Hakenstück 39 und damit der Nachlaufabschnitt 23 in der Front- oder Rückansicht das Profil eines umgedrehten T hat. Die Verbreiterung 45 ist an ihrem in Vorlaufrichtung oder Förderrichtung F vorderen Ende/Endabschnitt bzw. ihrem dem Aussparungsabschnitt 43 und dem Vorlaufabschnitt 21 zugewandten Ende/Endabschnitt mit einer horizontalen Abschrägung 47 versehen, und zwar jeweils an beiden seitlichen, freien Enden der Verbreiterung 45. Ferner ist die Verbreiterung 45 an ihren beiden seitlichen, freien Enden auch mit einer jeweiligen nach unten gerichteten, vertikalen Abschrägung 49 versehen.

Der Vorlaufabschnitt 21 des Mitnehmers 7 ist entlang seiner Rampe 25 oder seines Rampenprofils ebenfalls mit einer sich zu beiden Seiten (bezüglich der durch den Umlaufantriebsstrang 3 definierten zentralen Bahn) hin erstreckenden Verbreiterung 51 versehen, die hier flügelförmig ausgebildet ist, sodass die Rampe 25 und damit der Vorlaufabschnitt 21 des Mitnehmers 7 in der Front- oder Rückansicht das Profil eines umgedrehten T hat. Die Verbreiterung 51 der Rampe 25 kann in Förderrichtung F gesehen zum Beispiel an ihrer Oberseite horizontal entlang der Rampe 35 verlaufen, sodass die vertikale Dicke der Verbreiterung 51 vom vorderen Ende (Vorlauf-Ende) des Mitnehmers 7 aus zum Nachlaufabschnitt 23 hin zunimmt (siehe Ausführungsform von Fig. 1, 2, 3a-3c und 4). Die Verbreiterung 51 der Rampe 25 kann auch gemäß dem Rampenprofil 25 mit in etwa gleichbleibender, vertikaler Dicke mitlaufend ausgebildet sein. Die Verbreiterung ist an ihrem in Vorlaufrichtung oder Förderrichtung F hinteren Ende/Endabschnitt bzw. ihrem dem Aussparungsabschnitt 43 und dem Nachlaufabschnitt 23 zugewandten Ende/Endabschnitt mit einer horizontalen Abschrägung 53 versehen, und zwar jeweils an beiden seitlichen, freien Enden der Verbreiterung 51. Ferner ist die Verbreiterung 51 an ihren beiden seitlichen, freien Enden auch mit einer jeweiligen nach unten gerichteten, vertikalen Abschrägung 55, die sich hier von der Rampenfläche 27 (unteren Stirnfläche) der Rampe 25 aus bis zur Oberseite der Verbreiterung 51 erstreckt.

Wie an der Einschleusstelle 33 in Figur 2 ersichtlich ist, kann ein Läufer 31 mit sehr flachem/spitzem Horizontalwinkel α (hier ca. 30°) zwischen der Führungsbahn 29 und einer Einschleusbahn 57 von der Einschleusbahn 57 aus auf die Führungsbahn 29 in Eingriff mit dem Mitnehmer 7 gebracht werden. Die Verbreiterung 51 der Rampe 25 oder des Vorlaufabschnitts 21 mit ihrer/seiner vertikalen Abschrägung 55 erlaubt es dem Läufer 31 oder der Ware mit seinem/ihrem Mitnahmestück 41 den Mitnehmer 7 trotz des spitzen Einschleuswinkels in sanfter, reibungsloser Weise schon in einem gewissen seitlichen Abstand (definiert durch die seitliche Vorsprungslänge der Verbreiterung 51 der Rampe 25) zum zentralen, schmalen Abschnitt 24 des Mitnehmerkörpers 19 und damit zum Umlaufantriebsstrang 3 frühzeitig seitlich zu unterlaufen und ihn anzuheben. Die horizontalen Abschrägungen 53, 47 an beiden seitlichen Endabschnitten von sowohl der Verbreiterung 51 der Rampe 25/des Vorlaufabschnitts 21 als auch der Verbreiterung 45 des Hakens 37/des Nachlaufabschnitts 23 gewährleisten ein noch sanfteres seitliches Eingreifen des Mitnahmestücks 41 in den Aussparungsabschnitt 43 vor dem Haken 37.

Wie andererseits an der Ausschleusstelle 35 in Figur 2 ersichtlich ist, kann dort ein Läufer 31 mit sehr flachem/spitzem Horizontalwinkel α (hier ca. 30°) zwischen der Führungsbahn 29 und einer Ausschleusbahn 59 von der Führungsbahn 29 aus außer Eingriff von dem Mitnehmer 7 auf die Ausschleusbahn 59 gebracht werden. Die Verbreiterung 45 des Hakens 37 ermöglicht es, den Eingriff mit dem Mitnahmestück 41 des Läufers 31 noch eine gewisse Zeit lang aufrechtzuerhalten und damit den Läufer 31 noch entsprechend lang mitzunehmen, wenn der Läufer 31 sich schon auf der Ausschleusbahn 59 befindet, wodurch der Übergang auf die Ausschleusbahn 59 und die dortige Weiterbewegung sicherer gestaltet ist. Um den Eingriff zwischen Mitnehmer 7 und Läufer 31 beim Ausschleusen noch etwas länger aufrechtzuerhalten, kann das Mitnahmestück 41 z.B. ebenfalls seitlich langgstreckt (wie der Haken 37) ausgebildet sein (siehe z.B. auch Figur 5).

Es ist zu bemerken, dass im Falle der Verwendung von Einschleusstellen und Ausschleusstellen auf immer nur einer Seite des Umlaufantriebsstrangs 3 bzw. der Führungsbahn 29, die Verbreiterungen 45 und 51 des Hakens 37 bzw. der Rampe 25 sich auch nur zu einer Seite des Mitnehmers 7 hin vorerstrecken können, und zwar dann zu jener Seite hin, welche der Seite mit den Einschleusstellen und Ausschleusstellen zugewandt ist.

Die Verwendung von Rollläufern 31 zum Anhängen von Waren erlaubt es, den Vertikalwinkel β zwischen der Führungsbahn 29 (Horizontale) und der davon nach unten weggeneigten Ausschleusbahn 59 sowie den Vertikalwinkel β zwischen der Führungsbahn 29 (Horizontale) und der davon nach oben weggeneigten Einschleusbahn 57 ebenfalls sehr spitz zu wählen, z.B. wie in diesem Ausführungsbeispiel ca. 15°. Trotz dieser spitzen Winkel kann das Einschleusen und Ausschleusen nur durch Schwerkraftantrieb entlang der Einschleus- und der Ausschleusbahn 57, 59 erfolgen.

Ein Rollläufer 31 nach einer Ausführungsform ist z.B. in Figur 5 in der Perspektive dargestellt.

Der Rollläufer 31 hat einen Aufhängerkorpus 61 mit einem sich von einer Rollenachse 63 einer Rolle 65 aus nach unten erstreckenden, hier sich vertikal nach unten erstreckenden, ersten Steg 67, einen sich quer zu diesem von der einen Rollenseite 69 her zu der anderen Rollenseite 71 hin erstreckenden, hier sich schräg nach unten erstreckenden, zweiten Steg 73 und einen sich quer zu diesem nach unten erstreckenden, hier sich vertikal nach unten erstreckenden, dritten Steg 75, in welchem eine Hänge-Öse 77 ausgebildet ist, in welche Waren, z.B. Kleiderbügel, einhängbar sind.

Bei der in Figur 5 gezeigten Ausführungsform ist die Hänge-Öse 77 als geschlossener Ring ausgebildet. Bei der in Figur 1 gezeigten Ausführungsform ist die Hänge-Öse 77 als mit einer Schlitzöffnung ausgebildeter Ring ausgebildet.

Die Hänge-Öse erstreckt sich in diesem Ausführungsbeispiel mit ihrer Ösen-Öffnung 79 vertikal, wobei die Ösen-Öffnung 79 zur Seite hin, d.h. in der Richtung der Rollenachse 63 der Rolle 65, offen ist.

In dieser zweiten Ausführungsform ist die Hänge-Öse 13 fluchtend unter der Rolle 5 positioniert, und das langgestreckte Mitnahmestück 41 des Läufers 31 erstreckt sich mit seiner Längsrichtung quer von dem nach oben über die Rolle 65 hinausgehend verlängerten ersten Steg 67 des Aufhängerkorpus 61, und zwar von dem ersten Steg 67 ausgehend von der einen Rollenseite 69 zur anderen Rollenseite 71 hin. Das Mitnahmestück 41 ist an seinen Längsenden mit jeweils einer vom Läufer 31 weg und nach oben weisenden Abschrägung 42 versehen.

Der Aufhängerkorpus 61 ist hier als ein Stück ausgebildet, z.B. als ein Kunststoff-Spritzgussteil.

Die Rolle 65 erstreckt sich frei auskragend zu nur einer Seite des Aufhängerkorpus 61 und ist damit nur auf der einen Rollenseite 69 vom Aufhängerkorpus 61 begrenzt. Damit ist die Rolle 65 auch nur auf dieser einen Rollenseite 69 über die Rollenachse 63 mit dem Aufhängerkorpus 61 verbunden.

Die Führungsbahn 29 und auch die Einschleusbahn 57 und die Ausschleusbahn 59 sind von einer Profilschiene gebildet, die im Querschnitt (siehe Figur 1)im Wesentlichen ein C- oder U-Profil hat, welches zur Seite hin offen ist. Die jeweiligen Läufer 31 greifen mit ihrer Rolle 65 von der einen Seite (offene Seite der Profilschiene) in die durch das C- oder U-Profil gebildete Ausnehmung 81 in der Führungsbahn 29 bzw. der Einschleusbahn 57 oder der Ausschleusbahn 59 ein. Die Ausnehmung 81 ist hierbei ferner oben und unten mit einer oberen und einer unteren Hinterschneidung 83, 85 ausgebildet, in welche ein jeweiliger Abschnitt der Rolle 65 des jeweiligen Läufers 31 eingreift, so dass die Läufer 31 gegen seitliches Herausfallen aus der Ausnehmung 81 gesichert sind.

Der Mitnehmer 7 ist z.B. einstückig ausgebildet. Die im oberen Abschnitt des Mitnehmerkörpers 19 vorgesehenen Löcher 13, 15, in welche die verlängerten Kettenbolzen 9, 11 als Führungsstäbe eingreifen können, sind z.B. in einem sich von der Oberseite des zentralen, schmalen Abschnitts 24 des Mitnehmerkörpers 19 aus nach oben erstreckenden Sockel 91 ausgebildet, der an dem zentralen, schmalen Abschnitt 24 des Mitnehmerkörpers 19 (einstückig) angeformt ist.

An diesem Sockel 91 kann die Nase 17 (einstückig) angeformt sein (Figuren 3a-3c und 4), welche sich seitlich des Sockels 91 in Querrichtung (quer zur Förderrichtung F) erstreckt, oder der Stift 17' kann sich quer durch den Sockel 91 hindurch erstrecken.

Der Mitnehmer 7 und sein Mitnehmerkörper 19 können entlang der Linie, die den Vorlaufabschnitt 21 und den Nachlaufabschnitt 23 miteinander verbindet, langgestreckt ausgebildet sein, wobei der Mitnehmer 7 sich dann mit seiner Längsrichtung parallel zur Förderrichtung F und damit zum Umlaufantriebstrang 3 (an der jeweiligen Position des Mitnehmers 7 im Umlaufantriebsstrang 3) erstreckt. Damit erstrecken sich dann die Verbreiterungen 45, 51 und die Nase 17 oder der Stift 17' horizontal quer zur Längsrichtung des Mitnehmers 7 und des Mitnehmerkörpers 7. Der zentrale, schmale Abschnitt 24 des Mitnehmerkörpers 19 kann eine Plattengestalt haben und ebenfalls entlang dieser Linie, die den Vorlaufabschnitt 21 und den Nachlaufabschnitt 23 miteinander verbindet, langgestreckt ausgebildet sein.

Obwohl die Abschrägungen 47, 49, 53, 55 in den Ausführungsbeispielen als geradlinige Fasen gezeigt sind, können sie auch etwas konkav oder konvex abgerundet ausgebildet sein. Die Abschrägungen 47, 49, 53, 55 sind ferner hinsichtlich ihrer Abmessungen nicht nur derart klein, dass sie lediglich zu einer gebrochenen Kante führen, sondern erstrecken sich z.B. derart weit, dass wenigstens eine der angrenzenden und die zugehörige (imaginäre) Kante definierenden Flächen in ihrer Flächengröße um mindestens 20% oder mindestens 30% oder auch mindestens 50% bezüglich der bis zur (imaginären) Kante reichenende Fläche reduziert ist. Die jeweilige Abschrägung 47, 49, 53, 55 kann sich z.B. in wenigstens eine von diesen benachbarten Flächen um mehr als 5mm hinein erstrecken.

Weitere Ausführungsformen der Erfindung sind z.B. wie folgt:
Nach einer ersten weiteren Ausführungsform ist ein Mitnehmer 7 für eine Hängeförderanlage 1 zum Mitnehmen von an einer Führungsbahn 29 der Hängeförderanlage 1 hängenden Waren bereitgestellt, mit einem Mitnehmerkörper 19, der einen Vorlaufabschnitt 21 und einen Nachlaufabschnitt 23 hat, wobei der Vorlaufabschnitt 21 in Form einer Rampe 25 mit einem Rampenprofil ausgebildet ist, um ein sanftes Überlaufen von an der Führungsbahn 29 aufgestauten Waren zu ermöglichen, und
wobei der Nachlaufabschnitt 23 in Form eines Hakens 37 ausgebildet ist, um damit eine an der Führungsbahn 29 hängende Ware einzuhaken und sie entlang der Führungsbahn 29 mitzunehmen, wobei der Vorlaufabschnitt 21 entlang seiner Rampe 25 mit einer sich zu einer oder zu beiden Seiten hin erstreckenden, bevorzugt flügelartigen, Verbreiterung 51 ausgebildet ist.
Nach einer zweiten weiteren Ausführungsform ist ein Mitnehmer 7 für eine Hängeförderanlage 1 zum Mitnehmen von an einer Führungsbahn 29 der Hängeförderanlage 1 hängenden Waren bereitgestellt, mit einem Mitnehmerkörper 19, der einen Vorlaufabschnitt 21 und einen Nachlaufabschnitt 23 hat, wobei der Vorlaufabschnitt 21 in Form einer Rampe 25 mit einem Rampenprofil ausgebildet ist, um ein sanftes Überlaufen von an der Führungsbahn 29 aufgestauten Waren zu ermöglichen, und
wobei der Nachlaufabschnitt 23 in Form eines Hakens 37 ausgebildet ist, um damit eine an der Führungsbahn 29 hängende Ware einzuhaken und sie entlang der Führungsbahn 29 mitzunehmen, insbesondere gemäß der ersten weiteren Ausführungsform, wobei der Haken 37 an seinem freien Hakenende mit einer sich zu einer oder zu beiden Seiten hin erstreckenden, bevorzugt flügelartigen, Verbreiterung 45 ausgebildet ist.

Nach einer dritten weiteren Ausführungsform ist bei dem Mitnehmer 7 nach der ersten weiteren Ausführungsform oder nach der zweiten weiteren Ausführungsform sofern auf die erste weitere Ausführungsform rückbezogen die Verbreiterung 51 des Vorlaufabschnitts 23 an ihren zueinander entgegengesetzten, seitlichen, freien Endabschnitten jeweils mit einer vom Mitnehmer 7 weg sowie nach unten weisenden vertikalen Abschrägung 55 versehen.

Nach einer vierten weiteren Ausführungsform ist bei dem Mitnehmer 7 nach der zweiten weiteren Ausführungsform die Verbreiterung 45 des Hakens 37 an ihren zueinander entgegengesetzten, seitlichen, freien Endabschnitten jeweils mit einer vom Mitnehmer 7 weg sowie nach unten weisenden vertikalen Abschrägung 49 versehen.

Nach einer fünften weiteren Ausführungsform ist bei dem Mitnehmer 7 nach der ersten weiteren Ausführungsform oder nach einer der zweiten bis vierten weiteren Ausführungsformen sofern auf die erste weitere Ausführungsform rückbezogen die Verbreiterung 51 der Rampe 25 an ihrem dem Nachlaufabschnitt 23 zugewandten Ende beidseitig mit einer dem Nachlaufabschnitt 23 zugewandten horizontalen Abschrägung 53 versehen.

Nach einer sechsten weiteren Ausführungsform ist bei dem Mitnehmer 7 nach der zweiten weiteren Ausführungsform oder nach einem der dritten bis fünften weiteren Ausführungsformen soweit auf die zweite weitere Ausführungsform rückbezogen die Verbreiterung 45 des Hakens 37 an ihrem dem Vorlaufabschnitt 21 zugewandten Ende beidseitig mit einer dem Vorlaufabschnitt 21zugewandten horizontalen Abschrägung 47 versehen.

Gemäß einer siebten weiteren Ausführungsform ist eine Hängeförderanlage 1 bereitgestellt, mit einem Umlaufantriebsstrang 3, der in eine Förderrichtung F bewegbar angetrieben ist, und mit entlang dem Umlaufantriebsstrang 3 an diesem angebrachten Mitnehmern 7 nach einer der ersten bis sechsten weiteren Ausführungsformen, von welchen (Mitnehmern) beim Bewegen des Umlaufantriebsstrangs 3 auf einer zu dem Umlaufantriebsstrang 3 benachbart verlaufenden Führungsbahn 29 hängende Waren in die Förderrichtung F mitgenommen werden können, wobei die Mitnehmer 7 quer zu dem Umlaufantriebsstrang 3 auslenkbar an dem Umlaufantriebsstrang 3 angebracht sind.

Gemäß einer achten weiteren Ausführungsform weist die Hängeförderanlage 1 nach der siebten weiteren Ausführungsform ferner auf wenigstens eine Einschleusstelle 33 zum Einschleusen von Waren auf die Führungsbahn 29 entlang einer Einschleusbahn 57, wobei die Einschleusbahn 57 und die Führungsbahn 29 an der Einschleusstelle 33 einen Horizontalwinkel von nicht größer als 30° oder nicht größer als 25° oder nicht größer als 20° miteinander einschließen, und/oder mit wenigstens einer Ausschleusstelle 35 zum Ausschleusen von Waren von der Führungsbahn 29 entlang einer Ausschleusbahn 59, wobei die Ausschleusbahn 59 und die Führungsbahn 29 an der Ausschleusstelle 35 einen Horizontalwinkel von nicht größer als 30° oder nicht größer als 25° oder nicht größer als 20° miteinander einschließen.

Gemäß einer neunten weiteren Ausführungsform sind bei der Hängeförderanlage 1 nach der siebten oder der achten weiteren Ausführungsform die Waren mittels Läufern 31 an der Führungsbahn 29 angehängt, welche Läufer 31 jeweils ein dem Umlaufantriebsstrang 3 zugewandtes Mitnahmestück 41 aufweisen, das in Richtung quer zur Förderrichtung F langgestreckt ausgebildet ist, und an welchem der Haken 37 des jeweiligen Mitnehmers 7 zum Mitnehmen des Läufers 31 und damit der am Läufer 31 hängenden Ware angreifen kann.

Gemäß einer zehnten weiteren Ausführungsform sind bei der Hängeförderanlage 1 nach der neunten weiteren Ausführungsform die Läufer 31 jeweils als Rollläufer ausgebildet, wobei die Hängeförderanlage 1 wenigstens eine Einschleusstelle 33 zum Einschleusen von Waren auf die Führungsbahn 29 entlang einer Einschleusbahn 57 hat, wobei die Einschleusbahn 57 und die Führungsbahn 29 an der Einschleusstelle 33 einen Vertikalwinkel von nicht größer als 20° oder nicht größer als 15° oder nicht größer als 10° miteinander einschließen, und/oder wobei die Hängeförderanlage 1 wenigstens eine Ausschleusstelle 35 zum Ausschleusen von Waren von der Führungsbahn 29 entlang einer Ausschleusbahn 59 hat, wobei die Ausschleusbahn 59 und die Führungsbahn 29 an der Ausschleusstelle 35 einen Vertikalwinkel von nicht größer als 20° oder nicht größer als 15° miteinander einschließen.

## Patentansprüche

1. Mitnehmer (7) für eine Hängeförderanlage (1) zum Mitnehmen von an einer Führungsbahn (29) der Hängeförderanlage (1) hängenden Waren, mit einem Mitnehmerkörper (19), der einen Vorlaufabschnitt (21) und einen Nachlaufabschnitt (23) hat, wobei der Vorlaufabschnitt (21) an seiner unteren Stirnseite in Form einer Rampe (25) mit einem in Richtung vom Vorlaufabschnitt (21) zum Nachlaufabschnitt (23) nach unten hin ansteigenden Rampenprofil ausgebildet ist, um ein sanftes Überlaufen von an der Führungsbahn (29) aufgestauten Waren zu ermöglichen, und wobei der Nachlaufabschnitt (23) in Form eines Hakens (37) ausgebildet ist, um damit eine an der Führungsbahn (29) hängende Ware einzuhaken und sie entlang der Führungsbahn (29) mitzunehmen,
**dadurch gekennzeichnet, dass**
der Vorlaufabschnitt (21) entlang seiner Rampe (25) mit einer sich zu einer oder zu beiden Seiten hin erstreckenden, bevorzugt flügelartigen, Verbreiterung (51) der Rampe (25) ausgebildet ist.

2. Mitnehmer (7) nach Anspruch 1, wobei der Haken (37) an seinem freien Hakenende mit einer sich zu einer oder zu beiden Seiten hin erstreckenden, flügelartigen, Verbreiterung (45) ausgebildet ist.

3. Mitnehmer (7) nach Anspruch 1 oder 2, wobei die Verbreiterung (51) des Vorlaufabschnitts (23) an ihren zueinander entgegengesetzten, seitlichen, freien Endabschnitten jeweils mit einer vom Mitnehmer (7) weg sowie nach unten weisenden vertikalen Abschrägung (55) versehen ist.

4. Mitnehmer (7) nach Anspruch 2, wobei die Verbreiterung (45) des Haken (37) an ihren zueinander entgegengesetzten, seitlichen, freien Endabschnitten jeweils mit einer vom Mitnehmer (7) weg sowie nach unten weisenden vertikalen Abschrägung (49) versehen ist.

5. Mitnehmer (7) nach einem der Ansprüche 1-4, wobei die Verbreiterung (51) der Rampe (25) an ihrem dem Nachlaufabschnitt (23) zugewandten Ende beidseitig mit einer dem Nachlaufabschnitt (23) zugewandten horizontalen Abschrägung (53) versehen ist.

6. Mitnehmer (7) nach Anspruch 2 oder nach einem der Ansprüche 3-5 soweit auf Anspruch 2 rückbezogen, wobei die Verbreiterung (45) des Hakens (37) an ihrem dem Vorlaufabschnitt (21) zugewandten Ende beidseitig mit einer dem Vorlaufabschnitt (21)zugewandten horizontalen Abschrägung (47) versehen ist.

7. Hängeförderanlage (1)
mit einem Umlaufantriebsstrang (3), der in eine Förderrichtung (F) bewegbar angetrieben ist, und
mit entlang dem Umlaufantriebsstrang (3) an diesem angebrachten Mitnehmern (7) nach einem der Ansprüche 1-6, von welchen beim Bewegen des Umlaufantriebsstrangs (3) auf einer zu dem Umlaufantriebsstrang (3) benachbart verlaufenden Führungsbahn (29) hängende Waren in die Förderrichtung (F) mitgenommen werden können, wobei die Mitnehmer (7) quer zu dem Umlaufantriebsstrang (3) auslenkbar an dem Umlaufantriebsstrang (3) angebracht sind.

8. Hängeförderanlage (1) nach Anspruch 7, ferner mit wenigstens einer Einschleusstelle (33) zum Einschleusen von Waren auf die Führungsbahn (29) entlang einer Einschleusbahn (57), wobei die Einschleusbahn (57) und die Führungsbahn (29) an der Einschleusstelle (33) einen Horizontalwinkel von nicht größer als 30° oder nicht größer als 25° oder nicht größer als 20° miteinander einschließen, und/oder mit wenigstens einer Ausschleusstelle (35) zum Ausschleusen von Waren von der Führungsbahn (29) entlang einer Ausschleusbahn (59), wobei die Ausschleusbahn (59) und die Führungsbahn (29) an der Ausschleusstelle (35) einen Horizontalwinkel von nicht größer als 30° oder nicht größer als 25° oder nicht größer als 20° miteinander einschließen.

9. Hängeförderanlage (1) nach Anspruch 7 oder 8, wobei die Waren mittels Läufern (31) an der Führungsbahn (29) angehängt sind, welche Läufer (31) jeweils ein dem Umlaufantriebsstrang (3) zugewandtes Mitnahmestück (41) aufweisen, das in Richtung quer zur Förderrichtung (F) langgestreckt ausgebildet ist, und an welchem der Haken (37) des jeweiligen Mitnehmers (7) zum Mitnehmen des Läufers (31) und damit der am Läufer (31) hängenden Ware angreifen kann.

10. Hängeförderanlage (1) nach Anspruch 9, wobei die Läufer (31) jeweils als Rollläufer ausgebildet sind und wobei die Hängeförderanlage (1) wenigstens eine Einschleusstelle (33) zum Einschleusen von Waren auf die Führungsbahn (29) entlang einer Einschleusbahn (57) hat, wobei die Einschleusbahn (57) und die Führungsbahn (29) an der Einschleusstelle (33) einen Vertikalwinkel von nicht größer als 20° oder nicht größer als 15° oder nicht größer als 10° miteinander einschließen, und/oder wobei die Hängeförderanlage (1) wenigstens eine Ausschleusstelle (35) zum Ausschleusen von Waren von der Führungsbahn (29) entlang einer Ausschleusbahn (59) hat, wobei die Ausschleusbahn (59) und die Führungsbahn (29) an der Ausschleusstelle (35) einen Vertikalwinkel von nicht größer als 20° oder nicht größer als 15° miteinander einschließen.

## Claims

1. Carrier (7) for an overhead conveyor system (1) for carrying along articles hanging from a guide track (29) of the overhead conveyor system (1), having a carrier body (19) which has a forward section (21) and a rear section (23), wherein the forward section (21) is configured on its bottom face in the form of a ramp (25) having a ramp profile which ascends downwardly in the direction from the forward section (21) to the rear section (23) in order to permit smooth running over articles on the guide track (29), and wherein the rear section (23) is configured in the form of a hook (37) in order thus to hook an article hanging from the guide track (29) and carry it along the guide track (29),
**characterised in that**
the forward section (21) is configured along its ramp (25) with a widening (51), preferably a wing-like widening, of the ramp (25), which widening (51) extends on one side or on both sides.

2. Carrier (7) according to claim 1, wherein the hook (37) is configured at its free hook end with a widening (45), preferably a wing-like widening, which extends on one side or on both sides.

3. Carrier (7) according to claim 1 or 2, wherein the widening (51) of the forward section (23) is provided on each of its mutually opposite, lateral, free end portions with a vertical bevel (55) which points downwards and away from the carrier (7).

4. Carrier (7) according to claim 2, wherein the widening (45) of the hook (37) is provided on each of its mutually opposite, lateral, free end portions with a vertical bevel (49) which points downwards and away from the carrier (7).

5. Carrier (7) according to any one of claims 1 to 4, wherein the widening (51) of the ramp (25) is provided at its end facing the rear section (23), on both sides, with a horizontal bevel (53) facing the rear section (23).

6. Carrier (7) according to claim 2 or according to any one of claims 3 to 5 when dependent on claim 2, wherein the widening (45) of the hook (37) is provided at its end facing the forward section (21), on both sides, with a horizontal bevel (47) facing the forward section (21).

7. Overhead conveyor system (1)
having a revolving drive train (3) which is driven for movement in a conveying direction (F), and
having carriers (7) according to any one of claims 1 to 6 along the revolving drive train (3) and attached thereto, by means of which carriers (7), when the revolving drive train (3) is moved, articles hanging on a guide track (29) running adjacent to the revolving drive train (3) can be carried along in the conveying direction (F), wherein the carriers (7) are attached to the revolving drive train (3) in such a manner that they can be deflected transversely to the revolving drive train (3).

8. Overhead conveyor system (1) according to claim 7, further having at least one infeed point (33) for feeding articles onto the guide track (29) along an infeed track (57), wherein the infeed track (57) and the guide track (29) enclose between them at the infeed point (33) a horizontal angle of not more than 30° or not more than 25° or not more than 20°, and/or having at least one outfeed point (35) for feeding articles from the guide track (29) along an outfeed track (59), wherein the outfeed track (59) and the guide track (29) enclose between them at the outfeed point (35) a horizontal angle of not more than 30° or not more than 25° or not more than 20°.

9. Overhead conveyor system (1) according to claim 7 or 8, wherein the articles are hung on the guide track (29) by means of runners (31), each of which has a carrier piece (41) which faces the revolving drive train (3) and is elongated in the direction transverse to the conveying direction (F), and with which the hook (37) of the respective carrier (7) is able to engage in order to carry along the runner (31) and accordingly the article hanging from the runner (31).

10. Overhead conveyor system (1) according to claim 9, wherein the runners (31) are each in the form of roller runners, and wherein the overhead conveyor system (1) has at least one infeed point (33) for feeding articles onto the guide track (29) along an infeed track (57), wherein the infeed track (57) and the guide track (29) ericlose between them at the infeed point (33) a vertical angle of not more than 20° or not more than 15° or not more than 10°, and/or wherein the overhead conveyor system (1) has at least one outfeed point (35) for feeding articles from the guide track (29) along an outfeed track (59), wherein the outfeed track (59) and the guide track (29) enclose between them at the outfeed point (35) a vertical angle of not more than 20° or not more than 15°.

## Revendications

1. Entraîneur (7) pour un convoyeur suspendu (1), pour l'entraînement de marchandises suspendues à un rail de guidage (29) du convoyeur suspendu (1), avec un corps d'entraîneur (19) présentant une section avant (21) et une section arrière (23), la section avant (21) étant réalisée sous la forme d'une rampe (25) sur sa face frontale inférieure, avec un profil de rampe descendant de la section avant (21) vers la section arrière (23), pour permettre un glissement en douceur des marchandises serrées sur le rail de guidage (29), et la section arrière (23) étant réalisée sous la forme d'un crochet (37), pour accrocher ainsi une marchandise suspendue au rail de guidage (29) et entraîner celle-ci le long du rail de guidage (29),
**caractérisé en ce que**
la section avant (21) est prévue le long de sa rampe (25) avec un élargissement (51) de la rampe (25), de préférence en forme d'ailette, sur un côté ou de part et d'autre.

2. Entraîneur (7) selon la revendication 1, dans lequel le crochet (37) est prévu à son extrémité de crochet libre avec un élargissement (45) en forme d'ailette, sur un côté ou de part et d'autre.

3. Entraîneur (7) selon la revendication 1 ou 2, dans lequel l'élargissement (51) de la section avant (23) est pourvu sur chacune de ses parties d'extrémité latérales libres opposées d'un biseau (55) vertical opposé à l'entraîneur (7) et s'étendant vers le bas.

4. Entraîneur (7) selon la revendication 2, dans lequel l'élargissement (45) du crochet (37) est pourvu sur chacune de ses parties d'extrémité latérales libres opposées d'un biseau (49) vertical opposé à l'entraîneur (7) et s'étendant vers le bas.

5. Entraîneur (7) selon l'une des revendications 1 à 4, dans lequel l'élargissement (51) de la rampe (25) est pourvu de part et d'autre, à son extrémité dirigée vers la section arrière (23), d'un biseau (53) horizontal dirigé vers la section arrière (23).

6. Entraîneur (7) selon la revendication 2 ou selon l'une des revendications 3 à 5 si celle-ci est dépendante de la revendication 2, dans lequel l'élargissement (45) du crochet (37) est pourvu de part et d'autre, à son extrémité dirigée vers la section avant (21), d'un biseau (47) horizontal dirigé vers la section avant (21).

7. Convoyeur suspendu (1)
avec une transmission sans fin (3), entraînée dans une direction de transport (F), et
avec des entraîneurs (7) selon l'une des revendications 1 à 6 disposés le long de la transmission sans fin (3), par lesquelles peuvent être entraînées dans la direction de transport (F) des marchandises suspendues circulant sur un rail de guidage (29) proche de la transmission sans fin (3) lors du déplacement de la transmission sans fin (3), les entraîneurs (7) étant disposés transversalement à la transmission sans fin (3) et déviables sur ladite transmission sans fin (3).

8. Convoyeur suspendu (1) selon la revendication 7, avec en outre au moins un point d'arrivée (33) pour l'introduction sur le rail de guidage (29) de marchandises le long d'un rail d'arrivée (57), le rail d'arrivée (57) et le rail de guidage (29) formant entre eux au point d'arrivée (33) un angle horizontal non supérieur à 30° ou non supérieur à 25° ou non supérieur à 20°, et/ou avec au moins un point de sortie (35) pour la sortie de marchandises hors du rail de guidage (29) le long d'un rail de sortie (59), le rail de sortie (59) et le rail de guidage (29) formant entre eux au point de sortie (35) un angle horizontal non supérieur à 30° ou non supérieur à 25° ou non supérieur à 20°.

9. Convoyeur suspendu (1) selon la revendication 7 ou 8, dans lequel les marchandises sont accrochées au rail de guidage (29) au moyen de curseurs (31), lesdits curseurs (31) comportant chacun une pièce d'entraînement (41) dirigée vers la transmission sans fin (3), laquelle est réalisée avec une extension longitudinale dans la direction transversale à la direction de transport (F), et que peut saisir le crochet (37) de l'entraîneur (7) correspondant pour l'entraînement du curseur (31) et par conséquent de la marchandise accrochée au curseur (31).

10. Convoyeur suspendu (1) selon la revendication 9, dans lequel les curseurs (31) sont respectivement réalisés comme curseurs roulants et dans lequel le convoyeur suspendu (1) présente au moins un point d'arrivée (33) pour l'introduction sur le rail de guidage (29) de marchandises le long d'un rail d'arrivée (57), le rail d'arrivée (57) et le rail de guidage (29) formant entre eux au point d'arrivée (33) un angle vertical non supérieur à 20° ou non supérieur à 15° ou non supérieur à 10°, et/ou où le convoyeur suspendu (1) présente au moins un point de sortie (35) pour la sortie de marchandises hors du rail de guidage (29) le long d'un rail de sortie (59), le rail de sortie (59) et le rail de guidage (29) formant entre eux au point de sortie (35) un angle vertical non supérieur à 20° ou non supérieur à 15°.
